# EUROPÄISCHE PATENTSCHRIFT

(11) **EP 3 956 166 B1**
(45) Veröffentlichungstag und Bekanntmachung des Hinweises auf die Patenterteilung: **29.04.2026**
(21) Anmeldenummer: 20714933.7
(22) Anmeldetag: 17.03.2020
(51) Int. Cl.: B60K 7/00, B60K 1/02

(54) **DOPPELWELLENANTRIEB MIT ZWEI MOTOREN**
DUAL-SHAFT DRIVE WITH TWO MOTORS
ENTRAÎNEMENT D'ARBRE DOUBLE COMPORTANT DEUX MOTEURS

(30) Priorität: 18.04.2019 DE 102019110244
(43) Veröffentlichungstag der Anmeldung: 23.02.2022
(73) Patentinhaber: MAN Truck & Bus SE, 80995 München (DE)
(72) Erfinder: DRESCHER, Benjamin, 80995 München (DE)
(74) Vertreter: v. Bezold & Partner Patentanwälte - PartG mbB
(86) Internationale Anmeldenummer: PCT/EP2020/057297
(87) Internationale Veröffentlichungsnummer: WO 2020/212054

(56) Entgegenhaltungen:
- EP-A1- 3 109 082
- DE-A1- 102009 013 875
- DE-A1- 19 713 651

## Beschreibung

Die Erfindung betrifft eine Antriebsanordnung für ein Kraftfahrzeug, vorzugsweise Nutzfahrzeug, mit einer Antriebsachsenkonstruktion zum Antreiben von Kraftfahrzeug-Rädern, insbesondere einen Doppelwellenantrieb mit zwei z. B. elektrischen Motoren.

Im Stand der Technik ist es üblich, Kraftfahrzeugachsen mittels eines zentralen Antriebsstrangs anzutreiben, wobei der zentrale Antriebsstrang über ein achsseitiges Differential mit den Kraftfahrzeugachsen verbunden ist. Nachteilhaft daran ist das Erfordernis des üblicherweise aufwendigen achsseitigen Differentials.

Das Dokument DE 197 13 651 A1 offenbart ein Kraftfahrzeug mit zwei Motoren, einem ersten und zweiten Elektromotor, die auf gegenüberliegenden Seiten einer Längsmittelinie des Fahrzeugs angeordnet sind. Eine Antriebsachsanordnung, welche in Querrichtung beabstandet erste und zweite Getriebegehäuse aufweist, ist jeweils mit einem Eingangszahnrad versehen, welches durch eine der Antriebswellen angetrieben wird.

Das Dokument EP 3 109 082 A1 betrifft eine Kraftfahrzeug-Hybridantriebsstrangeinheit umfassend einen Verbrennungsmotor zum Antreiben der Hinterräder des Kraftfahrzeugs und einen Elektromotor oder zwei Elektromotoren zum Antreiben der Vorderräder des Kraftfahrzeugs. Der Verbrennungsmotor hat einen Motorblock, unterhalb dessen keine Ölwanne vorgesehen ist. Der oder die vorgenannten Elektromotoren sind unmittelbar unterhalb des Motorblocks des Verbrennungsmotors in dem Raum angeordnet, der bei einem herkömmlichen Motor von der Ölwanne eingenommen wird.

Eine Aufgabe der Erfindung ist es, eine alternative und/oder verbessere Antriebsanordnung für ein Kraftfahrzeug zu schaffen, insbesondere eine Antriebsanordnung, die kein achsseitiges Differential erfordert.

Diese Aufgabe kann mit den Merkmalen des unabhängigen Anspruchs gelöst werden. Vorteilhafte Weiterbildungen der Erfindung sind in den Unteransprüchen und der folgenden Beschreibung bevorzugter Ausführungsformen offenbart.

Die Erfindung betrifft eine Antriebsanordnung für ein Kraftfahrzeug, vorzugsweise Nutzfahrzeug, z. B. Lastkraftwagen oder Omnibus. Die Antriebsanordnung umfasst eine Antriebsachsenkonstruktion zum Antreiben von Kraftfahrzeug-Rädern, z. B. zumindest einem linken Rad und zumindest einem rechten Rad, wobei dadurch auch z. B. Doppelräder, Doppelbereifungen etc. umfasst sind.

Die Antriebsanordnung zeichnet sich insbesondere dadurch aus, dass die Antriebsachsenkonstruktion eine erste Antriebswelle und eine zweite Antriebswelle aufweist und eine erste Antriebsmaschine zum Antreiben der ersten Antriebswelle und eine zweite Antriebsmaschine zum Antreiben der zweiten Antriebswelle zur Verfügung gestellt ist, so dass z. B. ein achsseitiges Differential entfallen kann. Ferner ist es z. B. möglich, dass eine bedarfsgerechte und voneinander unabhängige Verteilung unterschiedlicher Drehmomente und/oder Drehzahlen zur ersten Antriebswelle und zur zweiten Antriebswelle vorteilhaft realisiert werden kann (insbesondere Torque Vectoring).

Dies birgt z. B. ferner den Vorteil, dass insbesondere die erste Antriebsmaschine und die zweite Antriebsmaschine an hinsichtlich Schwerpunkt und/oder Packaging günstigen Positionen am Kraftfahrzeug angeordnet werden können.

Die erste Antriebswelle kann z. B. zum Antreiben zumindest eines linken Rads dienen und die zweite Antriebswelle kann z. B. zum Antreiben zumindest eines rechten Rads dienen.

Es ist möglich, dass die erste Antriebsmaschine über eine erste Gelenkwelle, ein erstes Motorgetriebe und/oder ein erstes Achsgetriebe mit der ersten Antriebswelle insbesondere trieblich verbunden ist. Das erste Achsgetriebe kann z. B. ein Winkelgetriebe sein und/oder an die erste Antriebswelle angekoppelt sein.

Auch ist es möglich, dass die zweite Antriebsmaschine über eine zweite Gelenkwelle, ein zweites Motorgetriebe und/oder ein zweites Achsgetriebe mit der zweiten Antriebswelle insbesondere trieblich verbunden ist. Das zweite Achsgetriebe kann z. B. ein Winkelgetriebe sein und/oder an die zweite Antriebswelle angekoppelt sein.

Die Antriebsanordnung kann z. B. eine schaltbare Kupplung aufweisen, um die erste Antriebswelle mechanisch drehfest mit der zweiten Antriebswelle zu verbinden oder um die erste Antriebswelle und die zweite Antriebswelle trieblich voneinander zu trennen. Die schaltbare Kupplung kann somit insbesondere eine mechanische Sperre realisieren.

Vorteilhaft kann dadurch z. B. die Funktionalität eines Sperrdifferentials realisiert werden, ohne dass dieses tatsächlich als physisches Bauteil erforderlich ist. In der Sperrstellung der Kupplung können z. B. die erste Antriebswelle und die zweite Antriebswelle gemeinsam mit der ersten Antriebsmaschine trieblich in Verbindung stehen. Alternativ oder ergänzend kann auch die zweiten Antriebsmaschine in der Sperrstellung insbesondere mit der ersten Antriebswelle und der zweiten Antriebswelle in Verbindung stehen.

Es ist möglich, dass die erste Antriebsmaschine und die zweite Antriebsmaschine unabhängig voneinander angesteuert werden. Dadurch kann z. B. eine bedarfsgerechte und gleichzeitig unabhängige Verteilung unterschiedlicher Drehmomente und/oder Drehzahlen an die erste Antriebswelle und die zweite Antriebswelle ermöglicht werden (z. B. Torque Vectoring). Ferner kann z. B. die Dynamik des Fahrzeugs verbessert werden.

Auch ist es möglich, dass die erste Antriebsmaschine und die zweite Antriebsmaschine ohne ein z. B. leistungsübertragendes Summiergetriebe mit der ersten Antriebswelle und/oder der zweiten Antriebswelle trieblich verbunden sind.

Es ist möglich, dass die erste Antriebsmaschine und die zweite Antriebsmaschine gegenläufig arbeiten, .z. B. im Betrieb insbesondere gleichzeitig gegenläufige Drehrichtungen aufweisen.

Alternativ oder ergänzend können auch das erste Motorgetriebe und das zweite Motorgetriebe gegenläufig arbeiten, z. B. im Betrieb insbesondere gleichzeitig gegenläufige Drehrichtungen aufweisen.

Alternativ oder ergänzend können ferner die erste Gelenkwelle und die zweite Gelenkwelle gegenläufig arbeiten, z. B. im Betrieb insbesondere gleichzeitig gegenläufige Drehrichtungen aufweisen.

Ein Vorteil der drei letztgenannten Ausführungsformen liegt z. B. darin, dass sich unerwünschte Drehungs-erzeugte Dreh- und/oder Kippmomente zumindest weitgehend gegenseitig aufheben. In der Folge werden z. B. Lagerungen und z. B. Getriebeeinheiten weniger stark belastet und können z. B. zugunsten des Gewichts und des Bauraums kleiner dimensioniert werden.

Es ist möglich, dass die Antriebsanordnung eine Halterungskonstruktion aufweist, zur gemeinsamen Halterung der ersten Antriebsmaschine und/oder des ersten Motorgetriebes sowie der zweiten Antriebsmaschine und/oder des zweiten Motorgetriebes.

Es ist möglich, dass die erste Antriebsmaschine und die erste Gelenkwelle sich in Längsrichtung der Antriebsanordnung zumindest abschnittsweise überlappen, z .B. auf im Wesentlichen gleicher Höhe oder auf unterschiedlichen Höhen. Alternativ oder ergänzend ist es möglich, dass die zweite Antriebsmaschine und die zweite Gelenkwelle sich in Längsrichtung der Antriebsanordnung überlappen, z .B. auf im Wesentlichen gleicher Höhe oder auf unterschiedlichen Höhen.

Die Längsrichtung kann insbesondere einer geraden Fahrtrichtung der Antriebsanordnung entsprechen.

Auch ist es möglich, dass das erste Motorgetriebe und das zweite Motorgetriebe als im Wesentlichen 180°-Umlenkgetriebe ausgeführt sind, wodurch z. B. eine Umlenkung der Antriebskraft von im Wesentlichen 180° ermöglicht werden kann. Dies ermöglicht vorteilhaft eine besonders bauraumsparende Positionierung der ersten Antriebsmaschine gegenüber der ersten Gelenkwelle und der zweiten Antriebsmaschine gegenüber der zweiten Gelenkwelle.

Es ist möglich, dass kein Achsdifferential zwischen der ersten Antriebswelle und der zweiten Antriebswelle angeordnet ist.

Die Antriebsachsenkonstruktion kann z. B. eine Achsbrücke aufweisen, vorzugsweise einerseits zur zumindest abschnittsweisen Aufnahme der ersten Antriebswelle und/oder des ersten Achsgetriebes und andererseits zur zumindest abschnittsweisen Aufnahme der zweiten Antriebswelle und/oder des zweiten Achsgetriebes.

Die Achsbrücke kann z. B. in deren Zentrum frontseitig, z. B. an der Stirnseite der Achsbrücke, offenwandig sein, aber in Umfangsrichtung geschlossenwandig ausgeführt ist sein.

Das erste Achsgetriebe und das zweite Achsgetriebe können vorzugsweise fest an der Antriebsachsenkonstruktion, insbesondere fest an der Achsbrücke, montiert sein.

Es ist möglich, dass das erste Achsgetriebe und das zweite Achsgetriebe z. B. chassisfest montiert sind und somit vorzugsweise nicht an der Antriebsachsenkonstruktion und/oder nicht an der Achsbrücke fest montiert sind. Die Ausführungsform, bei der das erste Achsgetriebe und das zweite Achsgetriebe chassisfest montiert sind, kann z. B. sogenannte De-Dion-Achsen-/Ausführungsformen umfassen (zweckmäßiges De-Dion-Antriebsprinzip).

Es ist möglich, dass die erste Antriebsmaschine einen Elektromotor umfasst und die zweite Antriebsmaschine einen Elektromotor umfasst. Allerdings sind auch hydraulische und/oder pneumatische Motoren möglich.

Es ist somit im Kontext der Erfindung insbesondere möglich, dass der Antrieb der Antriebsanordnung über je eine Antriebsmaschine (z. B. Elektromotor) pro Kraftfahrzeugseite erfolgt, der über je eine Gelenkwelle mit je einem Winkelgetriebe verbunden sein kann, um auf je eine Kraftfahrzeugseite, insbesondere die zwei Antriebswellen, zu wirken.

Auch ist es möglich, dass das erste Achsgetriebe ein Kegelradgetriebe umfasst. Alternativ oder ergänzend kann auch das zweite Achsgetriebe ein Kegelradgetriebe umfassen.

Es ist möglich, dass die erste Antriebsmaschine, die erste Gelenkwelle, das erste Motorgetriebe und vorzugsweise das erste Achsgetriebe einen ersten Antriebsstrang bilden und die zweite Antriebsmaschine, die zweite Gelenkwelle, das zweite Motorgetriebe und vorzugsweise das zweite Achsgetriebe einen zweiten Antriebsstrang bilden.

Zu erwähnen ist noch, dass der Begriff "trieblich verbunden" vorzugsweise meint, dass die Verbindung zur Leistungsübertragung, vorzugsweise zur Übertragung und/oder Wandlung von Drehmoment und/oder Drehzahl, ausgebildet sein kann.

Es ist z. B. möglich, dass die erste Antriebsmaschine und die zweite Antriebsmaschine z. B. in einem Motorbetrieb, in welchem elektrische Energie in kinetische Energie gewandelt wird, als auch in einem Generatorbetrieb, in welchem kinetische Energie in elektrische Energie gewandelt wird, betrieben werden können.

Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit der beigefügten Figur.

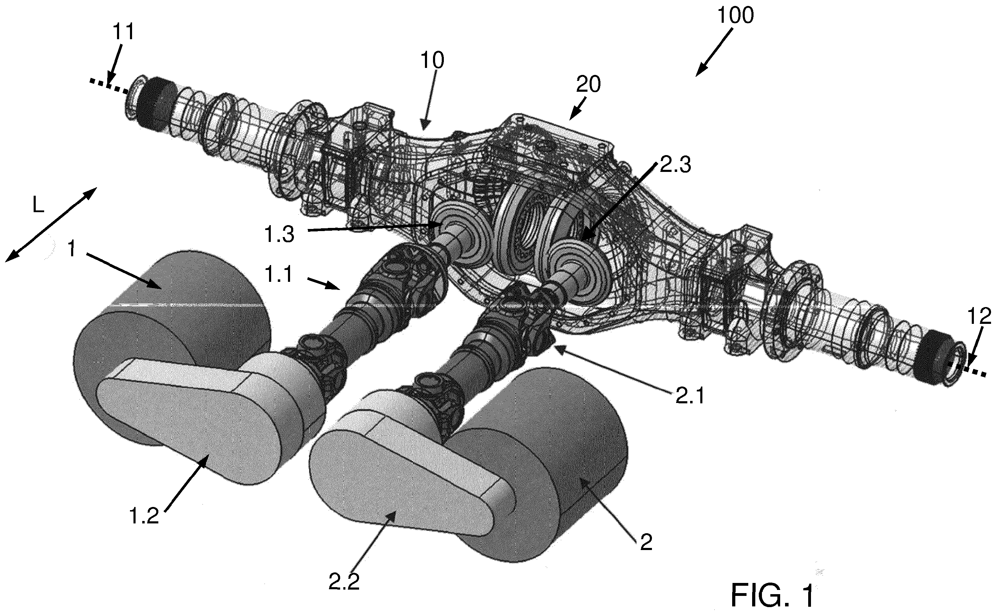

- Figur 1: zeigt eine perspektivische Ansicht einer Antriebsanordnung gemäß einer Ausführungsform der Erfindung.

Figur 1 zeigt eine Antriebsanordnung 100 für ein Kraftfahrzeug, vorzugsweise Nutzfahrzeug, mit einer Antriebsachsenkonstruktion 10 zum Antreiben von (nicht dargestellten) Kraftfahrzeug-Rädern.

Die Antriebsachsenkonstruktion 10 umfasst eine erste Antriebsmaschine 1 zum Antreiben einer ersten Antriebswelle 11 und eine zweite Antriebsmaschine 2 zum Antreiben einer zweiten Antriebswelle 12. Die erste Antriebswelle 11 befindet sich auf einer ersten Fahrzeugseite und die zweite Antriebswelle 12 befindet sich auf einer zweiten Fahrzeugseite. Die erste Antriebsmaschine 1 und die zweite Antriebsmaschine 2 können zugunsten der Dynamik des Fahrzeugs unabhängig voneinander, vorzugsweise durch zwei (nicht dargestellte) Steuereinheiten gesteuert werden.

Die erste Antriebsmaschine 1 ist über ein erstes Motorgetriebe 1.2, hier ausgeführt als 180°-Umlenkgetriebe, mit einer ersten Gelenkwelle 1.1 trieblich verbunden. Die zweite Antriebsmaschine 2 ist über ein zweites Motorgetriebe 2.2, hier ausgeführt als 180°-Umlenkgetriebe mit einer zweiten Gelenkwelle 2.1 trieblich verbunden. Die Kraftübertragung des ersten Motorgetriebes 1.2 und des zweiten Motorgetriebes 2.2 kann z. B. durch ein CVT-Getriebe, Zahnradgetriebe oder Kettengetriebe erfolgen. Die erste Gelenkwelle 1.1 und die zweite Gelenkwelle 2.1 können z. B. je zwei Kardangelenke aufweisen, die im Betrieb eine Ausgleichsbewegung, insbesondere eine vertikale Ausgleichbewegung, der Antriebsachsenkonstruktion 10 zulassen.

Die erste Antriebsmaschine 1 und die erste Gelenkwelle 1.1 sowie die zweite Antriebsmaschine 2 und die zweite Gelenkwelle 2.1 überlappen sich in Längsrichtung L der Antriebsanordnung.

An die erste Gelenkwelle 1.1 ist ein als Winkelgetriebe (z. B. Kegelradgetriebe) realisiertes erstes Achsgetriebe 1.3 angeflanscht, das die erste Gelenkwelle 1.1 und damit die erste Antriebsmaschine 1 trieblich mit der ersten Antriebswelle 11 verbindet. An die zweite Gelenkwelle 2.1 ist ein als Winkelgetriebe (z. B. Kegelradgetriebe) realisiertes zweites Achsgetriebe 2.3 angeflanscht, das die zweite Gelenkwelle 2.1 und damit die zweite Antriebsmaschine 2 trieblich mit der zweiten Antriebswelle 12 verbindet. Die triebliche Verbindung zwischen erster Antriebsmaschine 1 und zweiter Antriebsmaschine 2 sowie der ersten Antriebswelle 11 und zweiten Antriebswelle 12 weist kein Summiergetriebe auf. Ferner ist zwischen erster Antriebswelle 11 und zweiter Antriebswelle 12 kein Achsdifferential angeordnet. Das erste Achsgetriebe 1.3 und das zweite Achsgetriebe 2.3 sind mit je einer Radseite verbunden und könnnen diese unabhängig der jeweils anderen Radseite antreiben.

Die erste Antriebsmaschine 1 und die zweite Antriebsmaschine 2, das erste Motorgetriebe 1.2 und das zweite Motorgetriebe 2.2 sowie die erste Gelenkwelle 1.1 und die zweite Gelenkwelle 2.1 arbeiten zweckmäßig gegenläufig. Die Antriebsanordnung 100 kann eine (nicht dargestellte) Halterungskonstruktion umfassen zur gemeinsamen Halterung der ersten Antriebsmaschine 1 und alternativ oder ergänzend des ersten Motorgetriebes 1.2 sowie der zweiten Antriebsmaschine 2 und alternativ oder ergänzend des zweiten Motorgetriebes 2.2. Unerwünschte Drehungs-erzeugte Dreh- und/oder Kippmomente können sich somit zumindest weitgehend gegenseitig aufheben.

Die erste Antriebsmaschine 1, die erste Gelenkwelle 1.1, das erste Motorgetriebe 1.2 und das erste Achsgetriebe 1.3 bilden einen ersten Antriebsstrang.

Die zweite Antriebsmaschine 2, die zweite Gelenkwelle 2.1, das zweite Motorgetriebe 2.2 und das zweite Achsgetriebe 2.3 bilden einen zweiten Antriebsstrang.

Schnittstellen im ersten Antriebsstrang und im zweiten Antriebsstrang können durch geeignete Verbindungsmittel realisiert werden, z. B. Keilwellenverbindungen mit Wellenmuttern oder Sicherungsringen oder Wellennuten mit Passfedern und Sicherungsringen oder Welle-Bohrung-Presspassungen.

Vorzugsweise ist die erste Antriebsmaschine 1 als erster Elektromotor und die zweite Antriebsmaschine 2 als zweiter Elektromotor ausgeführt. Grundsätzlich kann die erste Antriebsmaschine 1 und die zweite Antriebsmaschine allerdings auch als hydraulisch oder pneumatisch arbeitende Antriebsmaschine realisiert sein.

Die erste Antriebswelle 11 und die zweite Antriebswelle 12 sind zur Aufnahme von (nicht dargestellten) Kraftfahrzeug-Rädern ausgebildet.

Die Antriebsanordnung 100 kann eine (nicht dargestellte) schaltbare Kupplung aufweisen. Die Kupplung kann z. B. als Klauenkupplung realisiert sein. In einer Sperrstellung der Kupplung kann die erste Antriebswelle 11 mechanisch drehfest mit der zweiten Antriebswelle 12 verbunden sein. In einer Offenstellung kann die erste Antriebswelle 1 und die zweite Antriebswelle 12 trieblich voneinander getrennt sein.

Die erste Antriebswelle 11, das erste Achsgetriebe 1.3, die zweite Antriebswelle 12 und das zweite Achsgetriebe 2.3 werden durch eine Achsbrücke 20 aufgenommen. Die Achsbrücke 20 ist in Umfangsrichtung geschlossen ausgeführt.

Die Öffnung der Achsbrücke 20 in Längsrichtung L befindet sich im Wesentlichen im Zentrum der Achsbrücke 20 an der Frontseite. Durch die Öffnung der Achsbrücke 20 in Längsrichtung L sind die erste Gelenkwelle 1.1 über das erste Achsgetriebe 1.3 mit der ersten Antriebswelle 11 sowie die zweite Gelenkwelle 2.1 über das zweite Achsgetriebe 2.3 mit der zweiten Antriebswelle 12 trieblich verbunden.

### Bezugszeichenliste

- 1: Erste Antriebsmaschine, insbesondere Elektromotor
- 1.1: Erste Gelenkwelle
- 1.2: Erstes Motorgetriebe
- 1.3: Erstes Achsgetriebe
- 2: Zweite Antriebsmaschine, insbesondere Elektromotor
- 2.1: Zweite Gelenkwelle
- 2.2: Zweites Motorgetriebe
- 2.3: Zweites Achsgetriebe
- 10: Antriebsachsenkonstruktion
- 11: Erste Antriebswelle
- 12: Zweite Antriebswelle
- 20: Achsbrücke
- 100: Antriebsanordnung
- L: Längsrichtung

## Patentansprüche

1. Antriebsanordnung (100) für ein Kraftfahrzeug, vorzugsweise Nutzfahrzeug, mit einer Antriebsachsenkonstruktion (10) zum Antreiben von Kraftfahrzeug-Rädern, wobei die Antriebsachsenkonstruktion (10) eine erste Antriebswelle (11) und eine zweite Antriebswelle (12) aufweist und eine erste Antriebsmaschine (1) zum Antreiben der ersten Antriebswelle (11) und eine zweite Antriebsmaschine (2) zum Antreiben der zweiten Antriebswelle (12) zur Verfügung gestellt ist, wobei die erste Antriebsmaschine (1) über eine erste Gelenkwelle (1.1) mit der ersten Antriebswelle (11) trieblich verbunden ist, und die zweite Antriebsmaschine (2) über eine zweite Gelenkwelle (2.1) mit der zweiten Antriebswelle (12) trieblich verbunden ist, **dadurch gekennzeichnet, dass** die erste Antriebsmaschine (1) und die erste Gelenkwelle (1.1) sich in Längsrichtung (L) der Antriebsanordnung (100) überlappen und/oder die zweite Antriebsmaschine (2) und die zweite Gelenkwelle (2.1) sich in Längsrichtung (L) der Antriebsanordnung (100) überlappen.

2. Antriebsanordnung (100) nach Anspruch 1, **dadurch gekennzeichnet, dass** die erste Antriebsmaschine (1) über ein erstes Motorgetriebe (1.2) und/oder ein erstes Achsgetriebe (1.3), vorzugsweise Winkelgetriebe (1.3), mit der ersten Antriebswelle (11) trieblich verbunden ist.

3. Antriebsanordnung (100) nach einem der vorhergehenden Ansprüche, **dadurch gekennzeichnet, dass** die zweite Antriebsmaschine (2) über ein zweites Motorgetriebe (2.2) und/oder ein zweites Achsgetriebe (2.3), vorzugsweise Winkelgetriebe (2.3), mit der zweiten Antriebswelle (12) trieblich verbunden ist.

4. Antriebsanordnung (100) nach einem der vorhergehenden Ansprüche, **dadurch gekennzeichnet, dass** die Antriebsanordnung (100) eine schaltbare Kupplung aufweist, um wahlweise die erste Antriebswelle (11) mechanisch drehfest mit der zweiten Antriebswelle (12) zu verbinden oder um die erste Antriebswelle (11) und die zweite Antriebswelle (12) trieblich voneinander zu trennen.

5. Antriebsanordnung (100) nach einem der vorhergehenden Ansprüche, **dadurch gekennzeichnet, dass** die erste Antriebsmaschine (1) und die zweite Antriebsmaschine (2) unabhängig voneinander angesteuert werden, vorzugsweise mittels zweier Steuereinheiten.

6. Antriebsanordnung (100) nach einem der vorhergehenden Ansprüche, **dadurch gekennzeichnet, dass** die erste Antriebsmaschine (1) und die zweite Antriebsmaschine (2) ohne ein Summiergetriebe mit der ersten Antriebswelle (11) und/oder der zweiten Antriebswelle (12) trieblich verbunden sind.

7. Antriebsanordnung (100) nach einem der vorhergehenden Ansprüche, **dadurch gekennzeichnet dass**
- die erste Antriebsmaschine (1) und die zweite Antriebsmaschine (2) gegenläufig arbeiten, wodurch sich unerwünschte Drehungs-erzeugte Dreh- und/oder Kippmomente zumindest weitgehend gegenseitig aufheben, und/oder
- die erste Gelenkwelle (1.1) und die zweite Gelenkwelle (2.1) gegenläufig arbeiten, wodurch sich unerwünschte Drehungs-erzeugte Dreh- und/oder Kippmomente zumindest weitgehend gegenseitig aufheben.

8. Antriebsanordnung (100) nach einem der vorhergehenden Ansprüche, **dadurch gekennzeichnet, dass** die Antriebsanordnung (100) eine Halterungskonstruktion umfasst zur gemeinsamen Halterung der ersten Antriebsmaschine (1) sowie der zweiten Antriebsmaschine (2).

9. Antriebsanordnung (100) nach den Ansprüchen 2 und 3, **dadurch gekennzeichnet, dass**
- das erste Motorgetriebe (1.2) und das zweite Motorgetriebe (2.2) als 180°-Umlenkgetriebe ausgeführt sind, und/oder
- das erste Motorgetriebe (1.2) und das zweite Motorgetriebe (2.2) gegenläufig arbeiten, wodurch sich unerwünschte Drehungs-erzeugte Dreh- und/oder Kippmomente zumindest weitgehend gegenseitig aufheben, und/oder
- die Antriebsanordnung (100) eine Halterungskonstruktion umfasst zur gemeinsamen Halterung der ersten Antriebsmaschine (1) und des ersten Motorgetriebes (1.2) sowie der zweiten Antriebsmaschine (2) und des zweiten Motorgetriebes (2.2).

10. Antriebsanordnung (100) nach einem der vorhergehenden Ansprüche, **dadurch gekennzeichnet, dass** kein Achsdifferential zwischen der ersten Antriebswelle (11) und der zweiten Antriebswelle (12) angeordnet ist.

11. Antriebsanordnung (100) nach einem der vorhergehenden Ansprüche, **dadurch gekennzeichnet, dass**
- die Antriebsachsenkonstruktion (10) eine Achsbrücke (20) aufweist und zwar einerseits zur Aufnahme der ersten Antriebswelle (11) und/oder des ersten Achsgetriebes (1.3) und andererseits zur Aufnahme der zweiten Antriebswelle (12) und/oder des zweiten Achsgetriebes (2.3) und vorzugsweise die Achsbrücke (20) in deren Zentrum frontseitig offenwandig ist, aber in Umfangsrichtung geschlossenwandig ausgeführt ist, oder
- das erste Achsgetriebe (1.3) und das zweite Achsgetriebe (2.3) chassisfest montiert sind.

12. Antriebsanordnung (100) nach einem der vorhergehenden Ansprüche, **dadurch gekennzeichnet, dass** die erste Antriebsmaschine (1) einen Elektromotor umfasst und die zweite Antriebsmaschine (2) einen Elektromotor umfasst.

13. Kraftfahrzeug, vorzugsweise Nutzfahrzeug, umfassend eine Antriebsanordnung (100) nach einem der vorhergehenden Ansprüche.

## Claims

1. Drive arrangement (100) for a motor vehicle, preferably a utility vehicle, with a drive axle structure (10) for driving motor vehicle wheels, wherein the drive axle structure (10) comprises a first drive shaft (11) and a second drive shaft (12) and a first drive machine (1) is provided for driving the first drive shaft (11) and a second drive machine (2) is provided for driving the second drive shaft (12), wherein the first drive machine (1) is drivingly connected to the first drive shaft (11) via a first propeller shaft (1.1), and the second drive machine (2) is drivingly connected to the second drive shaft (12) via a second propeller shaft (2.1), **characterized in that** the first drive machine (1) and the first propeller shaft (1.1) overlap in the longitudinal direction (L) of the drive arrangement (100) and/or the second drive machine (2) and the second propeller shaft (2.1) overlap in the longitudinal direction (L) of the drive arrangement (100).

2. Drive arrangement (100) according to claim 1, **characterized in that** the first drive machine (1) is drivingly connected to the first drive shaft (11) via a first motor gearbox (1.2) and/or a first axle gearbox (1.3), preferably angular gearbox (1.3).

3. Drive arrangement (100) according to any one of the preceding claims, **characterized in that** the second drive machine (2) is drivingly connected to the second drive shaft (12) via a second motor gearbox (2.2) and/or a second axle gearbox (2.3), preferably angular gearbox (2.3).

4. Drive arrangement (100) according to any one of the preceding claims, **characterized in that** the drive arrangement (100) comprises a shiftable clutch in order optionally to mechanically connect the first drive shaft (11) to the second drive shaft (12) in a rotationally fixed manner or to separate the first drive shaft (11) and the second drive shaft (12) from one another in terms of drive.

5. Drive arrangement (100) according to any one of the preceding claims, **characterized in that** the first drive machine (1) and the second drive machine (2) are controlled independently of one another, preferably by means of two control units.

6. Drive arrangement (100) according to any one of the preceding claims, **characterized in that** the first drive machine (1) and the second drive machine (2) are drivingly connected to the first drive shaft (11) and/or the second drive shaft (12) without a summation gear.

7. Drive arrangement (100) according to any one of the preceding claims, **characterized in that**
- the first drive machine (1) and the second drive machine (2) operate in opposite directions, as a result of which undesirable rotational and/or tilting torques generated by rotation at least largely cancel each other out, and/or
- the first propeller shaft (1.1) and the second propeller shaft (2.1) operate in opposite directions, as a result of which undesirable rotational and/or tilting torques generated by rotation at least largely cancel each other out.

8. Drive arrangement (100) according to any one of the preceding claims, **characterized in that** the drive arrangement (100) comprises a holder structure for jointly holding the first drive machine (1) and the second drive machine (2).

9. Drive arrangement (100) according to claims 2 and 3, **characterized in that**
- the first motor gearbox (1.2) and the second motor gearbox (2.2) are designed as 180° angled gearboxes, and/or
- the first motor gearbox (1.2) and the second motor gearbox (2.2) operate in opposite directions, whereby undesirable rotational and/or tilting torques generated by rotation at least largely cancel each other out, and/or
- the drive arrangement (100) comprises a holder structure for jointly holding the first drive machine (1) and the first motor gearbox (1.2) as well as the second drive machine (2) and the second motor gearbox (2.2).

10. Drive arrangement (100) according to any one of the preceding claims, **characterized in that** no axle differential is arranged between the first drive shaft (11) and the second drive shaft (12).

11. Drive arrangement (100) according to any one of the preceding claims, **characterized in that**
- the drive axle structure (10) comprises an axle bridge (20), on the one hand for accommodating the first drive shaft (11) and/or the first axle gearbox (1.3) and on the other hand for accommodating the second drive shaft (12) and/or the second axle gearbox (2.3), and preferably the axle bridge (20) is open-walled at its center on the front side, but is closed-walled in the circumferential direction, or
- the first axle gearbox (1.3) and the second axle gearbox (2.3) are mounted fixed to the chassis.

12. Drive arrangement (100) according to any one of the preceding claims, **characterized in that** the first drive machine (1) comprises an electric motor and the second drive machine (2) comprises an electric motor.

13. Motor vehicle, preferably utility vehicle, comprising a drive arrangement (100) according to one of the preceding claims.

## Revendications

1. Ensemble d'entraînement (100) pour un véhicule à moteur, de préférence un véhicule utilitaire, avec une structure d'essieu d'entraînement (10) pour entraîner des roues de véhicule à moteur, la structure d'essieu d'entraînement (10) comportant un premier arbre d'entraînement (11) et un second arbre d'entraînement (12), ainsi qu'une première machine d'entraînement (1) pour entraîner le premier arbre d'entraînement (11) et une seconde machine d'entraînement (2) pour entraîner le second arbre d'entraînement (12), la première machine d'entraînement (1) étant reliée en entraînement au premier arbre d'entraînement (11) par un premier arbre articulé (1.1) et la seconde machine d'entraînement (2) étant reliée en entraînement au second arbre d'entraînement (12) par un second arbre articulé (2.1), **caractérisé en ce que** la première machine d'entraînement (1) et le premier arbre articulé (1.1) se chevauchent dans le sens longitudinal (L) de l'ensemble d'entraînement (100) et/ou la seconde machine d'entraînement (2) et le second arbre articulé (2.1) se chevauchent dans le sens longitudinal (L) de l'ensemble d'entraînement (100).

2. Ensemble d'entraînement (100) selon la revendication 1, **caractérisé en ce que** la première machine d'entraînement (1) est reliée en entraînement au premier arbre d'entraînement (11) par une première transmission de moteur (1.2) et/ou une première transmission d'essieu (1.3), de préférence une transmission angulaire (1.3).

3. Ensemble d'entraînement (100) selon l'une des revendications précédentes, **caractérisé en ce que** la seconde machine d'entraînement (2) est reliée en entraînement au second arbre d'entraînement (12) par une seconde transmission de moteur (2.2) et/ou une seconde transmission d'essieu (2.3), de préférence une transmission angulaire (2.3).

4. Ensemble d'entraînement (100) selon l'une des revendications précédentes, **caractérisé en ce que** l'ensemble d'entraînement (100) comporte un accouplement commutable pour relier au choix le premier arbre d'entraînement (11) mécaniquement de manière solidaire en rotation au second arbre d'entraînement (12) ou pour séparer en entraînement le premier arbre d'entraînement (11) et le second arbre d'entraînement (12) l'un de l'autre.

5. Ensemble d'entraînement (100) selon l'une des revendications précédentes, **caractérisé en ce que** la première machine d'entraînement (1) et la seconde machine d'entraînement (2) sont pilotées indépendamment l'une de l'autre, de préférence au moyen de deux unités de commande.

6. Ensemble d'entraînement (100) selon l'une des revendications précédentes, **caractérisé en ce que** la première machine d'entraînement (1) et la seconde machine d'entraînement (2) sont reliées en entraînement au premier arbre d'entraînement (11) et/ou au second arbre d'entraînement (12) sans transmission totalisatrice.

7. Ensemble d'entraînement (100) selon l'une des revendications précédentes, **caractérisé en ce que**
- la première machine d'entraînement (1) et la seconde machine d'entraînement (2) fonctionnent en sens inverse, ce qui a pour effet que des couples de rotation et/ou de basculement non souhaités générés par une rotation s'annulent au moins largement mutuellement, et/ou
- le premier arbre articulé (1.1) et le second arbre articulé (2.1) fonctionnent en sens inverse, ce qui a pour effet que des couples de rotation et/ou de basculement non souhaités générés par une rotation s'annulent au moins largement mutuellement.

8. Ensemble d'entraînement (100) selon l'une des revendications précédentes, **caractérisé en ce que** l'ensemble d'entraînement (100) comprend une structure de maintien pour maintenir conjointement la première machine d'entraînement (1) et la seconde machine d'entraînement (2).

9. Ensemble d'entraînement (100) selon les revendications 2 et 3, **caractérisé en ce que**
- la première transmission de moteur (1.2) et la seconde transmission de moteur (2.2) sont réalisées sous la forme d'une transmission de renvoi à 180°, et/ou
- la première transmission de moteur (1.2) et la seconde transmission de moteur (2.2) fonctionnent en sens inverse, ce qui a pour effet que des couples de rotation et/ou de basculement non souhaités générés par une rotation s'annulent au moins largement mutuellement, et/ou
- l'ensemble d'entraînement (100) comprend une structure de maintien pour maintenir conjointement la première machine d'entraînement (1) et la première transmission de moteur (1.2) et la seconde machine d'entraînement (2) et la seconde transmission de moteur (2.2) .

10. Ensemble d'entraînement (100) selon l'une des revendications précédentes, **caractérisé en ce qu'**aucun différentiel d'essieu n'est disposé entre le premier arbre d'entraînement (11) et le second arbre d'entraînement (12).

11. Ensemble d'entraînement (100) selon l'une des revendications précédentes, **caractérisé en ce que**
- la structure d'essieu d'entraînement (10) comporte un pont d'essieu (20), à savoir d'une part pour recevoir le premier arbre d'entraînement (11) et/ou la première transmission d'essieu (1.3) et d'autre part pour recevoir le second arbre d'entraînement (12) et/ou la seconde transmission d'essieu (2.3), et de préférence le pont d'essieu (20) comporte des parois ouvertes côté avant au centre de celui-ci, mais est réalisé avec des parois fermées dans la direction périphérique, ou
- la première transmission d'essieu (1.3) et la seconde transmission d'essieu (2.3) sont montées de manière solidaire au châssis.

12. Ensemble d'entraînement (100) selon l'une des revendications précédentes, **caractérisé en ce que** la première machine d'entraînement (1) comprend un moteur électrique et la seconde machine d'entraînement (2) comprend un moteur électrique.

13. Véhicule à moteur, de préférence véhicule utilitaire, comprenant un ensemble d'entraînement (100) selon l'une des revendications précédentes.
